# EUROPEAN PATENT SPECIFICATION

(11) **EP 3 315 283 B1**
(45) Date of publication and mention of the grant of the patent: **14.10.2020**
(21) Application number: 17199743.0
(22) Date of filing: 02.11.2017
(51) Int. Cl.: B29C 45/50

(54) **INJECTION UNIT**
EINSPRITZEINHEIT
ENSEMBLE D'INJECTION

(30) Priority: 31.10.2016 JP 2016213820
(43) Date of publication of application: 02.05.2018
(73) Proprietor: Sumitomo Heavy Industries, Ltd., Tokyo 141-6025 (JP)
(72) Inventor: YAMASHITA, Koki, Chiba-shi, Chiba 263-0001 (JP)
(74) Representative: Louis Pöhlau Lohrentz

(56) References cited:
- JP-A- 2000 052 393
- US-A- 6 068 810

## Description

### BACKGROUND OF THE INVENTION

### Field of the Invention

Certain embodiment of the present invention relates to an injection unit.

Priority is claimed to Japanese Patent Application No. 2016-213820, filed October 31, 2016.

### Description of Related Art

An electric injection molding machine disclosed in International Publication No. WO 2005/037519 includes an injection unit which fills a cavity space of a mold unit with resin. The injection unit is provided with a plasticizing cylinder which heats and melts resin, a screw which is disposed to be rotatable and movable forward or backward in the plasticizing cylinder, a plasticizing electric motor which rotates the screw, and an injection electric motor which moves the screw forward or backward. Since the screw, the plasticizing electric motor, and the injection electric motor are disposed on the same axis, inertia is small and responsiveness is favorable.

Japanese Patent Document JP2000052393A discloses an injection molding unit with a cylinder, a screw, a plasticizing motor, an injection motor, and a coupling connected to the screw and including a spline shaft.

A plasticizing screw driven by hydraulic oil acting on a piston is disclosed in United States Patent US 6 068 810.

In the related art, there is provided a spline shaft which is splined to a tubular rotor of a plasticizing motor and which transmits a driving force of the plasticizing motor and a driving force of an injection motor to a screw. The spline shaft and the screw are connected to each other via a coupling and the coupling is disposed inside the rotor of the plasticizing motor.

In the related art, there is a high possibility of galling between the rotor of the plasticizing motor and the coupling, which results in a high frequency of maintenance.

### SUMMARY OF THE INVENTION

The present invention is made in consideration of the above-described problems, and an object thereof is to provide an injection unit in which galling between a rotor of a plasticizing motor and a coupling is suppressed.

In order to achieve the object, according to an aspect of the present invention, there is provided an injection unit including a cylinder that heats molding material, a screw which is disposed to be rotatable and movable forward or backward in the cylinder, a plasticizing motor which rotates the screw, an injection motor which moves the screw forward or backward, a coupling which is connected to the screw and which includes a spline shaft which is splined to a tubular rotor of the plasticizing motor inside the rotor such that a driving force of the plasticizing motor and a driving force of the injection motor are transmitted to the screw, annular packing which is held by one of the rotor and the coupling and is in contact with the other of the rotor and the coupling in a slidable manner to seal a gap between the rotor and the coupling, and a slide ring which is held by one of the rotor and the coupling and is in contact with the other of the rotor and the coupling in a slidable manner such that the center line of the rotor matches the center line of the coupling.

According to the aspect of the present invention, the injection unit in which galling between the rotor of the plasticizing motor and the coupling is suppressed is provided.

### BRIEF DESCRIPTION OF THE DRAWINGS

Fig. 1 is a view showing a state where filling in an injection molding machine according to an embodiment is completed.
Fig. 2 is a view showing a state where plasticizing in the injection molding machine according to the embodiment is completed.

### DETAILED DESCRIPTION OF THE INVENTION

Hereinafter, an embodiment of the present invention is described with reference to the drawings. In each drawing, the same or corresponding reference numerals are assigned to the same or corresponding configurations, and descriptions thereof are omitted.

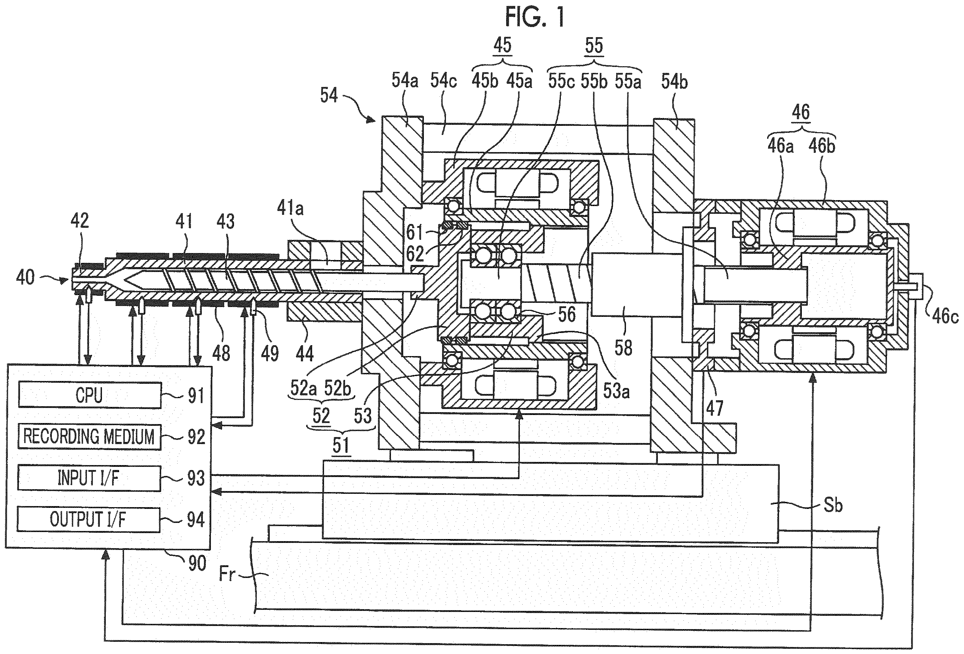

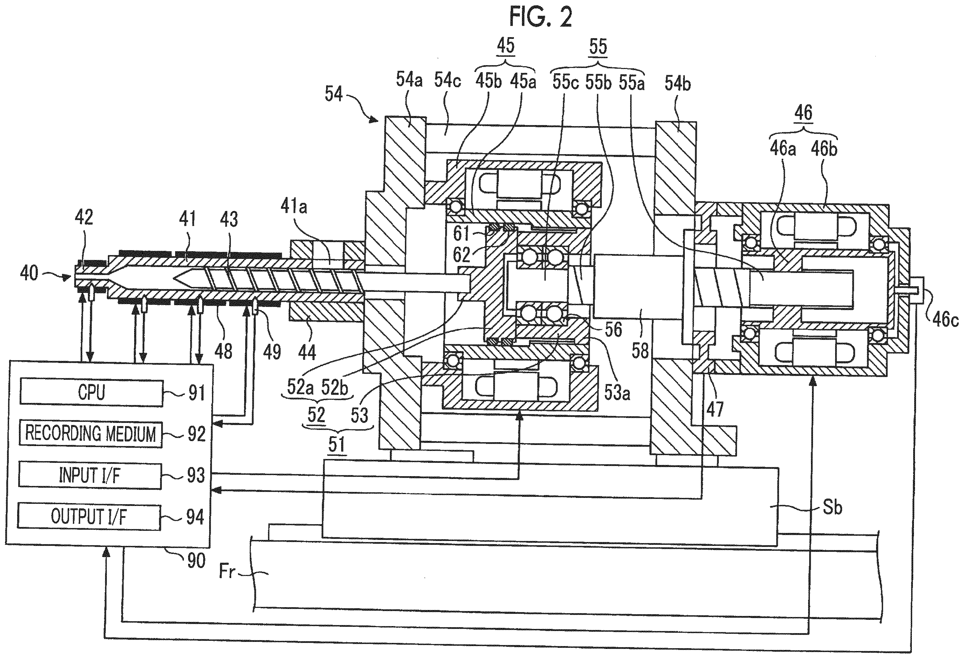

Fig. 1 is a view showing a state where filling in an injection molding machine according to an embodiment is completed. Fig. 2 is a view showing a state where plasticizing in the injection molding machine according to the embodiment is completed.

The injection molding machine includes a frame Fr, an injection unit 40, and a controller 90. Hereinafter, a movement direction (left direction in Figs. 1 and 2) of a screw 43 during filling is referred to as a front side, and a movement direction (right direction in Figs. 1 and 2) of the screw 43 during plasticizing is referred to as a rear side.

The injection unit 40 is installed on a slide base Sb which is movable forward or backward with respect to the frame Fr, and is movable forward or backward with respect to a mold unit. The injection unit 40 comes into contact with the mold unit, and fills a cavity space inside the mold unit with molding material. The molding material filling the cavity space is cooled and solidified, and thus, a molding product is obtained. For example, the injection unit 40 includes a cylinder 41, a nozzle 42, the screw 43, a cooler 44, a plasticizing motor 45, an injection motor 46, a pressure detector 47, a heater 48, a temperature detector 49, and the like.

The cylinder 41 heats the molding material which is supplied from a supply port 41a to the inner portion of the cylinder 41. The supply port 41a is formed on the rear portion of the cylinder 41. The cooler 44 such as a water cooling cylinder is provided on the outer periphery of the rear portion of the cylinder 41. The heater 48 such as a band heater and the temperature detector 49 are provided on the outer periphery of the cylinder 41 on the front side of the cooler 44.

The cylinder 41 is divided into a plurality of zones in an axial direction (right and left directions in Figs. 1 and 2) of the cylinder 41. The heater 48 and the temperature detector 49 are provided in each zone. The controller 90 controls the heater 48 such that a detection temperature of the temperature detector 49 for each zone becomes a set temperature.

The nozzle 42 is provided on the front end portion of the cylinder 41 and is pressed against the mold unit. The heater 48 and the temperature detector 49 are provided on the outer periphery of the nozzle 42. The controller 90 controls the heater 48 such that a detection temperature of the nozzle 42 becomes a set temperature.

The screw 43 is disposed in the cylinder 41 so as to be rotatable and movable forward or backward. If the screw 43 rotates, the molding material is fed forward along spiral grooves of the screw 43. The molding material is gradually melted by heat of the cylinder 41 while being fed forward. The liquid molding material is fed to the front portion of the screw 43 and is accumulated in the front portion of the cylinder 41, and thus, the screw 43 moves backward. Thereafter, if the screw 43 moves forward, the molding material in front of the screw 43 is injected from the nozzle 42 and fills the inside of the mold unit. The screw 43, the plasticizing motor 45, and the injection motor 46 are disposed on the same straight line.

The plasticizing motor 45 rotates the screw 43. Rotary motion of the plasticizing motor 45 is transmitted to a coupling 51 which is splined to a rotor 45a of the plasticizing motor 45 and is transmitted to the screw 43 from the coupling 51.

For example, as shown in Figs. 1 and 2, the coupling 51 includes a screw attachment portion 52 to which the screw 43 is attached and a plasticizing spline shaft 53 which is splined to the rotor 45a. In Figs. 1 and 2, the plasticizing spline shaft 53 is formed separately from the screw attachment portion 52 and is connected to the screw attachment portion 52. However, the plasticizing spline shaft 53 may be integrally formed with the screw attachment portion 52.

The plasticizing spline shaft 53 is disposed inside the tubular rotor 45a of the plasticizing motor 45 and is splined to the rotor 45a. The plasticizing spline shaft 53 includes a plurality of keys 53a at intervals in a circumferential direction on the outer periphery. The rotor 45a of the plasticizing motor 45 includes a plurality of key grooves into which the plurality of keys 53a are inserted in a slidable manner on the inner periphery. In addition, one key 53a or one key groove may be provided. As shown in Figs. 1 and 2, the keys 53a of the plasticizing spline shaft 53 may be disposed on the rear portion (more preferably, rear end) of the coupling 51 and the key grooves of the rotor 45a may be disposed on the rear portion (more preferably, rear end) of the rotor 45a.

The plasticizing motor 45 is fixed to an injection frame 54 which moves forward or backward along with the slide base Sb. The injection frame 54 includes a front support 54a, a rear support 54b, and a connection rod 54c which connects the front support 54a and the rear support 54b to each other. The rear end portion of the cylinder 41 and a stator 45b of the plasticizing motor 45 are fixed to the front support 54a. A stator 46b of the injection motor 46 is fixed to the rear support 54b.

The injection motor 46 is fixed to the injection frame 54 and moves the screw 43 forward or backward. Rotary motion of the injection motor 46 is converted into rotary linear motion of a drive shaft 55 which is splined to a rotor 46a of the injection motor 46 and is screwed to a screw nut 58 (which will be described later) and is converted into linear motion of the coupling 51 which holds a bearing 56 rotatably supporting the drive shaft 55. The screw 43 moves forward or backward as the coupling 51 moves forward or backward.

The drive shaft 55 includes an injection spline shaft 55a which is splined to the rotor 46a of the injection motor 46, a screw shaft 55b which is screwed to the screw nut 58 fixed to the rear support 54b, and a rotation shaft 55c which is rotatably supported by the bearing 56. The injection spline shaft 55a, the screw shaft 55b, and the rotation shaft 55c are arranged on the same straight line in this order in a direction from the rear side to the front side. In addition, a ball or a roller may be interposed between the screw shaft 55b and the screw nut 58.

The coupling 51 performs linear motion as the drive shaft 55 performs rotary linear motion. Since the coupling 51 and the plasticizing motor 45 are splined to each other, the plasticizing motor 45 does not move forward or backward when the coupling 51 moves forward or backward. Since the plasticizing motor 45 is not one of the driving targets of the injection motor 46, the inertia of the driving targets of the injection motor 46 is small and the screw 43 accelerates rapidly when the screw 43 starts to move forward.

The pressure detector 47 is provided on a force transmission path between the injection motor 46 and the screw 43 and detects a load applied to the pressure detector 47. For example, the pressure detector 47 is attached to the rear support 54b and the screw nut 58 and detects a load applied to the pressure detector 47. In addition, the position of the pressure detector 47 is not particularly limited.

The pressure detector 47 sends signals indicating the detection results to the controller 90. The detection results of the pressure detector 47 are used to control or monitor a pressure received by the screw 43 from the molding material, a back pressure with respect to the screw 43, a pressure applied from the screw 43 to the molding material, or the like.

As shown in Figs. 1 and 2, the controller 90 includes a Central Processing Unit (CPU) 91, a recording medium 92 such as a memory, an input interface 93, and an output interface 94. The controller 90 executes a program stored in the recording medium 92 using the CPU 91 to perform various controls. In addition, the controller 90 receives signals from the outside using the input interface 93 and sends signals to the outside using the output interface 94. The controller 90 controls a filling process, a holding pressure process, a plasticizing process, and the like.

In the filling process, the injection motor 46 is driven to move the screw 43 forward at a set speed, and the cavity space inside the mold unit is filled with the liquid molding material accumulated in front of the screw 43. For example, the position or speed of the screw 43 is detected using an encoder 46c of the injection motor 46. The encoder 46c detects the rotation of the injection motor 46 and sends signals indicating the detection results to the controller 90. If the position of the screw 43 reaches a set position, switching (so called V/P switching) from the filling process to the holding pressure process is performed. The set speed of the screw 43 maybe changed according to the position of the screw 43, the time, or the like.

Moreover, in the filling process, after the position of the screw 43 reaches the set position, the screw 43 may temporarily stop at the set position, and thereafter, the V/P switching may be performed. Immediately before the V/P switching, instead of stopping the screw 43, the screw 43 may move forward or may move backward at a very slow speed.

In the holding pressure process, the injection motor 46 is driven to press the screw 43 forward at a set pressure, and a pressure is applied to the molding material inside the mold unit. Accordingly, insufficient molding materials caused by cooling shrinkage can be replenished. For example, the pressure of the molding material is detected using the pressure detector 47. The pressure detector 47 sends signals indicating the detection results to the controller 90.

In the holding pressure process, the molding material inside the cavity space in the mold unit is gradually cooled, and when the holding pressure process is completed, the inlet of the cavity space is closed by the molding material which is solidified. This state is referred to as a gate seal, and a backflow of the molding material from the cavity space is prevented. After the holding pressure process, a cooling process starts. In the cooling process, solidification of the molding material inside the cavity space is performed. In order to shorten a molding cycle, the plasticizing process may be performed during the cooling process.

In the plasticizing process, the plasticizing motor 45 is driven to rotate the screw 43 at a set rotating speed and the molding material is fed forward along the spiral grooves of the screw 43. According to this, the molding material is gradually melted. The screw 43 moves backward as the liquid molding material is fed to the front side of the screw 43 and is accumulated in front of the cylinder 41. For example, the rotating speed of the screw 43 is detected using an encoder of the plasticizing motor 45. The encoder sends signals indicating the detection results to the controller 90.

In the plasticizing process, in order to restrict an abrupt backward movement of the screw 43, the injection motor 46 may be driven so as to apply a set back pressure to the screw 43. For example, the back pressure with respect to the screw 43 is detected using the pressure detector 47. The pressure detector 47 sends signals indicating the detection results to the controller 90. If the screw 43 moves backward to the set position and a predetermined amount of the molding material is accumulated in front of the screw 43, the plasticizing process ends.

Hereinafter, the injection unit 40 will be described again with reference to Figs. 1 and 2.

The injection unit 40 includes the coupling 51 which is connected to the screw 43. The coupling 51 includes the plasticizing spline shaft 53 which is splined to the rotor 45a inside the rotor 45a of the plasticizing motor 45. The plasticizing spline shaft 53 transmits a driving force of the plasticizing motor 45 and a driving force of the injection motor 46 to the screw 43. The plasticizing spline shaft 53 corresponds to a spline shaft described in claims. An annular groove into which annular packing 61 is fitted and an annular groove into which a slide ring 62 is fitted are formed on the outer circumferential surface of the coupling 51.

For example, the annular packing 61 is held by the coupling 51 and is in contact with the rotor 45a of the plasticizing motor 45 in a slidable manner to seal a gap between the rotor 45a and the coupling 51. Accordingly, it is possible to prevent lubricant supplied to the plasticizing spline shaft 53 from leaking to the screw 43 side.

The annular packing 61 may be attached to the plasticizing spline shaft 53 and may be attached to the screw attachment portion 52 as shown in Figs. 1 and 2 as long as the annular packing 61 is attached at a position in front of the key 53a of the plasticizing spline shaft 53. The screw attachment portion 52 may include a small-diameter portion 52a to which the screw 43 is attached and a large-diameter portion 52b which is larger than the small-diameter portion 52a. The annular packing 61 may be disposed on the front portion of the large-diameter portion 52b. The rear end portion of the large-diameter portion 52b is connected to the plasticizing spline shaft 53. In addition, as described above, the plasticizing spline shaft 53 may be integrally formed with the screw attachment portion 52.

As the annular packing 61, for example, an O-ring with a circular sectional shape is used while being appropriately compressed. The annular packing 61 is formed of softer material than the slide ring 62 in order to secure sealing properties. Examples of the material of the annular packing 61 include rubber such as butyl rubber.

In addition, in the present embodiment, the annular packing 61 is held by the coupling 51. However, the annular packing 61 may be held by the rotor 45a of the plasticizing motor 45 and may be in contact with the coupling 51 in a slidable manner to seal a gap between the rotor 45a and the coupling 51.

For example, the slide ring 62 is held by the coupling 51 and is in contact with the rotor 45a of the plasticizing motor 45 in a slidable manner such that the center line of the rotor 45a matches the center line of the coupling 51. Accordingly, it is possible to suppress galling between the rotor 45a and the coupling 51. In addition, it is possible to suppress an unbalanced load being applied to the annular packing 61.

In order to suppress the eccentricity between the rotor 45a and the coupling 51, the slide ring 62 is formed of harder material than the annular packing 61. As the material of the slide ring 62, crystalline resin or the like, which is excellent in self-lubricating properties, is used. Examples of the crystalline resin include polytetrafluoroethylene (PTFE), polyamide (PA), polyester (PES), and polyethylene (PE). The self-lubricating properties become great as the degree of crystallinity becomes great. The slide ring 62 may be formed of resin other than the crystalline resin. For example, the slide ring 62 may be formed of cloth-containing phenol resin.

Since the slide ring 62 is not for securing sealing properties unlike the annular packing 61, the slide ring 62 includes a nick on a portion in a circumferential direction. The nick is formed for attachment and detachment of the slide ring 62, is expanded at the time of attachment and detachment, and restores the original shape thereof due to an elastic restoring force of the slide ring 62 after the expansion.

In addition, in the present embodiment, the slide ring 62 is held by the coupling 51. However, the slide ring 62 may be held by the rotor 45a of the plasticizing motor 45 and may be in contact with the coupling 51 in a slidable manner such that the center line of the rotor 45a matches the center line of the coupling 51. In addition, a plurality of slide rings 62 may be provided.

As shown in Figs. 1 and 2, the slide ring 62 and the annular packing 61 are disposed in this order in a direction from the key 53a of the plasticizing spline shaft 53 (rear side) to the screw 43 (front side). The annular packing 61 prevents the lubricant, which is supplied to the plasticizing spline shaft 53 and passes through the slide ring 62, from leaking to the screw 43 side. It is possible to reduce the sliding friction of the slide ring 62 by supplying the lubricant to the slide ring 62 and it is possible to suppress the lubricant leaking to the screw 43 side. Here, the lubricant supplied to the plasticizing spline shaft 53 passes through a space between the slide ring 62 and the rotor 45a of the plasticizing motor 45, a space between the slide ring 62 and the coupling 51, and the nick formed on the slide ring 62.

Hereinbefore, embodiments of the injection molding machine are described. However, the present invention is not limited to the embodiments or the like, and various modifications and improvements can be applied within a scope of the present invention described in claims.

### Brief Description of the Reference Symbols

- 40:: injection unit
- 41:: cylinder
- 43:: screw
- 45:: plasticizing motor
- 45a:: rotor
- 45b:: stator
- 46:: injection motor
- 51:: coupling
- 53:: plasticizing spline shaft
- 61:: annular packing
- 62:: slide ring
- 90:: controller

## Claims

1. An injection unit (40) comprising:
a cylinder (41) that heats a molding material;
a screw (43) which is disposed to be rotatable and movable forward or backward in the cylinder (41);
a plasticizing motor (45) which rotates the screw (43);
an injection motor (46) which moves the screw (43) forward or backward;
a coupling (51) which is connected to the screw (43) and which includes a spline shaft (53) which is splined to a tubular rotor (45a) of the plasticizing motor (45) inside the rotor such that a driving force of the plasticizing motor (45) and a driving force of the injection motor (46) are transmitted to the screw (43) ;
annular packing (61) which is held by one of the rotor (45a) and the coupling (51) and is in contact with the other of the rotor (45a) and the coupling (51) in a slidable manner to seal a gap between the rotor (45a) and the coupling (51);
**characterized by** that the injection unit further comprises:
a slide ring (62) which is held by one of the rotor (45a) and the coupling (51) and is in contact with the other of the rotor (45a) and the coupling (51) in a slidable manner such that the center line of the rotor (45a) matches the center line of the coupling (51).

2. The injection unit (40) according to claim 1,
wherein the hardness of the slide ring (62) is greater than the hardness of the annular packing (61).

3. The injection unit (40) according to claim 1 or 2,
wherein the slide ring (62) and the annular packing (61) are disposed in this order in a direction from a key of the spline shaft (53) to the screw (43), and
wherein the annular packing (61) prevents lubricant, which is supplied to the spline shaft (53) and passes through the slide ring (62), from leaking to the screw (43) side.

## Patentansprüche

1. Einspritzeinheit (40), umfassend:
einen Zylinder (41), der ein Formmaterial erwärmt;
eine Schnecke (43), die so angeordnet ist, dass sie in dem Zylinder (41) drehbar und vor- oder zurückbewegbar ist;
einen Plastifiziermotor (45), der die Schnecke (43) dreht;
einen Einspritzmotor (46), der die Schnecke (43) vor-oder zurückbewegt;
eine Kupplung (51), die mit der Schnecke (43) verbunden ist und die eine Keilwelle (53) aufweist, die mit einem röhrenförmigen Rotor (45a) des Plastifiziermotors (45) im Inneren des Rotors derart keilverzahnt ist, dass eine Antriebskraft des Plastifiziermotors (45) und eine Antriebskraft des Einspritzmotors (46) auf die Schnecke (43) übertragen werden;
eine ringförmige Dichtung (61), die durch eines von dem Rotor (45a) und der Kupplung (51) gehalten wird und mit dem anderen von dem Rotor (45a) und der Kupplung (51) in einer gleitbaren Weise in Kontakt steht, um einen Spalt zwischen dem Rotor (45a) und der Kupplung (51) abzudichten;
**dadurch gekennzeichnet, dass** die Einspritzeinheit ferner umfasst:
einen Gleitring (62), der durch eines von dem Rotor (45a) und der Kupplung (51) gehalten wird und mit dem anderen von dem Rotor (45a) und der Kupplung (51) derart in einer gleitbaren Weise in Kontakt steht, dass die Mittellinie des Rotors (45a) mit der Mittellinie der Kupplung (51) übereinstimmt.

2. Einspritzeinheit (40) nach Anspruch 1,
wobei die Härte des Gleitrings (62) größer als die Härte der ringförmigen Dichtung (61) ist.

3. Einspritzeinheit (40) nach Anspruch 1 oder 2,
wobei der Gleitring (62) und die ringförmige Dichtung (61) in dieser Reihenfolge in einer Richtung von einer Passfeder der Keilwelle (53) zu der Schnecke (43) angeordnet sind, und
wobei die ringförmige Dichtung (61) verhindert, dass Schmiermittel, das der Keilwelle (53) zugeführt wird und durch den Gleitring (62) hindurchgeht, zur Seite der Schnecke (43) durchsickert.

## Revendications

1. Une unité d'injection (40) comprenant :
un cylindre (41) qui chauffe une matière de moulage ;
une vis (43) qui est disposée pour pouvoir être tournée et se déplacer vers l'avant ou vers l'arrière dans le cylindre (41) ;
un moteur de plastification (45) qui fait tourner la vis (43) ;
un moteur d'injection (46) qui déplace la vis (43) vers l'avant ou vers l'arrière ;
un accouplement (51) qui est relié à la vis (43) et qui inclut un arbre cannelé (53) qui est accouplé par cannelures à un rotor tubulaire (45a) du moteur de plastification (45) à l'intérieur du rotor de telle sorte qu'une force d'entraînement du moteur de plastification (45) et qu'une force d'entraînement du moteur d'injection (46) sont transmises à la vis (43) ;
une garniture annulaire (61) qui est maintenue par l'un du rotor (45a) et de l'accouplement (51) et est en contact avec l'autre du rotor (45a) et de l'accouplement (51) d'une manière coulissante pour sceller un espace entre le rotor (45a) et l'accouplement (51) ;
**caractérisée en ce que** l'unité d'injection comprend en outre :
une bague coulissante (62) qui est maintenue par l'un du rotor (45a) et de l'accouplement (51) et est en contact avec l'autre du rotor (45a) et de l'accouplement (51) d'une manière coulissante de telle sorte que l'axe central du rotor (45a) correspond à l'axe central de l'accouplement (51).

2. L'unité d'injection (40) selon la revendication 1,
dans laquelle la dureté de la bague coulissante (62) est supérieure à la dureté de la garniture annulaire (61).

3. L'unité d'injection (40) selon la revendication 1 ou 2,
dans laquelle la bague coulissante (62) et la garniture annulaire (61) sont disposées dans cet ordre dans une direction allant d'une clavette de l'arbre cannelé (53) à la vis (43), et
dans laquelle la garniture annulaire (61) empêche le lubrifiant, qui est fourni à l'arbre cannelé (53) et passe à travers la bague coulissante (62), de fuir vers le côté de la vis (43).
